# EUROPÄISCHE PATENTSCHRIFT

(11) **EP 1 383 934 B1**
(45) Veröffentlichungstag und Bekanntmachung des Hinweises auf die Patenterteilung: **26.08.2009**
(21) Anmeldenummer: 02730121.7
(22) Anmeldetag: 06.04.2002
(51) Int. Cl.: C22B 3/00, C01F 7/47, C01F 7/06, C01G 23/053

(54) **ENTFERNUNG NICHT-WASSERLÖSLICHER SUBSTANZEN AUS LÖSUNGEN WÄSSRIGER METALLAUFSCHLÜSSE**
REMOVAL OF NON-WATER SOLUBLE SUBSTANCES FROM SOLUTIONS OF AQUEOUS METAL EXTRACTS
ELIMINATION DE SUBSTANCES NON SOLUBLES DANS L'EAU CONTENUES DANS DES SOLUTIONS DE PREPARATIONS METALLIQUES AQUEUSES

(30) Priorität: 20.04.2001 DE 10119685
(43) Veröffentlichungstag der Anmeldung: 28.01.2004
(73) Patentinhaber: Ashland Licensing and Intellectual Property LLC, Dublin, OH 43017 (US)
(72) Erfinder: KUBOTH, Detlef, 40559 Düsseldorf (DE)
(74) Vertreter: Kutzenberger, Helga
(86) Internationale Anmeldenummer: PCT/EP2002/003869
(87) Internationale Veröffentlichungsnummer: WO 2002/086173

(56) Entgegenhaltungen:
- GB-A- 2 112 005
- US-A- 3 962 332
- US-A- 4 597 952
- US-A- 5 133 874
- US-A- 5 284 634
- US-A- 5 512 646

## Beschreibung

Die vorliegende Erfindung betrifft ein Verfahren und eine Vorrichtung zur Entfernung nicht-wasserlöslicher Substanzen aus Lösungen wässriger Metallaufschlüsse durch den Zusatz wasserlöslicher kationischer Polyelektrolyte, die mit Mineralsäuren neutralisierte oder quaternierte und anschließend polymerisierte Dimethylaminopropylacrylamide enthalten.

Einige Metalle und Metallverbindungen werden aus natürlichen Rohstoffen durch wässrige Aufschlüsse gewonnen.
Beispielsweise wird Aluminium aus Aluminiumoxid gewonnen, das weltweit nach dem Verfahren von Karl Joseph Bayer aus Bauxit hergestellt wird. Dazu wird vermahlenes Bauxit mit einer heißen wässrigen Natronlaugenlösung aufgeschlossen und das Aluminium in Natriumaluminat überführt, wobei letzteres bei hohen Temperaturen in der Aufschlusslösung löslich ist und bei der Absenkung der Temperatur ausfällt.
Bei wässrigen Aufschlüssen natürlicher Rohstoffe gehen sowohl lösliche als auch dispergierte und kolloidale nicht-wasserlösliche Verunreinigungen der Rohstoffe in die wässrige Phase über.
Als problematisch erweisen sich insbesondere bei der Ausfällung von Metallverbindungen die nicht-wasserlöslichen, insbesondere die nicht-wasserlöslichen organischen Verunreinigungen wie beispielsweise Huminstoffe, Rotschlämme und Oxalate, die kolloidal oder dispergiert in der Aufschlusslösung vorliegen. Diese nicht-wasserlöslichen Verunreinigungen behindern die Ausfällung der Metallverbindungen aus den Aufschlusslösungen und verunreinigen die Fällungsprodukte. Zudem reichern sich diese nicht-wasserlöslichen Verbindungen in Aufschlußlösungen an, die in solchen Verfahren wiederverwendet werden.

Die US 4,578,255 beschreibt Verfahren zur Reduzierung nicht-wasserlöslicher huminsäureartiger Verunreinigungen aus Aufschlusslösungen des Bayer-Verfahrens durch das teilweise Ausfällen dieser Verunreinigungen mit wasserlöslichen polymeren quaternären Ammoniumsalzen, insbesondere mit Homopolymeren aus Diallyldimethylammoniumchloridmonomeren.

Nur die Homopolymere von Polydiallyldimethylammoniumchlorid ermöglichen eine technisch ausreichende Reduktion der Huminsäuren, während andere polymere quarternäre Ammoniumsalze und heterogene Copolymere, beispielsweise aus Diallyldimethylammoniumchlorid und Acrylamid, erheblich schlechtere Ergebnisse erzielen. Die Herstellung dieser Verbindungen ist vergleichsweise schwierig. Außerdem stehen diese Polymerisate nicht als Feststoff zur Verfügung. Zudem ist die Effizienz dieser Polymerprodukte noch gering.

Der vorliegenden Erfindung liegt die Aufgabe zugrunde, ein Verfahren zur Verfügung zu stellen, das die Nachteile des Standes der Technik nicht aufweist.

Gelöst wird diese Aufgabe durch ein Verfahren zur Entfernung nicht-wasserlöslicher Substanzen aus Lösungen wässriger metallaufschlüsse durch den Zusatz mindestens eines wasserlöslichen kationischen Polyelektrolyts, das mindestens einen Anteil von 50 Mol-% von mit mindestens einer Mineralsäure neutralisiertem oder quaterniertem und anschließend polymerisiertem Dialkyl aminoalkyl(meth)acrylamid, vorzugsweise Dimethylaminopropylacrylamid, bezogen auf die Gesamtmenge des Polyelektrolyts, enthält, wobei das Polyelektrolyt einen Polymerisationsgrad von mindestens 90% aufweist. Vorzugsweise enthält das kationische Polyelektrolyt mindestens einen Anteil von 70 Mol-%, besonders bevorzugt einen Anteil von mindestens 90 mol-% von mit Mineralsäure neutralisiertem oder quaterniertem und anschließend polymerisiertem Dialkyl aminoalkyl(meth)acrylamid, vorzugsweise Dimethylaminopropylacrylamid, bezogen auf die Gesamtmenge des Polyelektrolyts.

Ganz besonders bevorzugt ist das kationische Polyelektrolyt als Homopolymer aus mit Mineralsäure neutralisiertem oder quaterniertem und anschließend polymerisiertem Diallylaminoalkyl(meth)acrylamid, vorzugsweise Dimethylaminopropylacrylamid.

Weiterhin bevorzugt sind Copolymere von Acrylamid und mit Mineralsäure neutralisiertem oder quaterniertem und anschließend polymerisiertem Dialkyl aminoalkyl(meth)acrylamid, vorzugsweise Dimethylaminopropylacrylamid.

Ganz besonders bevorzugt sind solche Copolymere, bei denen der Quotient aus Grenzviskosität des Copolmeren und dem Molverhältnis von Acrylamid zu Dimethylaminopropylacrylamid mindestens 200 ml/g beträgt.

Im erfindungsgemäßen Verfahren verwendbare bevorzugte Copolymere aus Acrylamid und Dimethylaminopropylacrylamid sind beispielsweise in der EP 0 228 637 B1 zur Entwässerung von Klärschlämmen beschrieben werden. Bezüglich der Herstellung von Copolymeren aus Acrylamid (ACA) und Dimethylaminopropylacrylamid (DMAPAA) wird auf die Seiten 3 und 10 der EP 0 228 637 B1 Bezug genommen.

Die Homopolymerisate sowie die Copolymerisate können nach bekannten Polymerisationsverfahren hergestellt werden.

Im folgenden wird beispielhaft die Herstellung von Copolymerisaten aus ACA und mit Mineralsäuren neutralisiertem oder quaterniertem DMAPAA dargestellt. Für die Erzielung eines Quotienten aus Grenzviskosität und Molverhältnis von ACA und DMAPAA von mindestens 200 ml/g ist die Reinheit des DMAPAA wesentlich. DMAPAA sollte sowohl zur Herstellung der Homopolymere wie auch von Copolymeren im wesentlichen frei von bifunktionellen Verbindungen sein, d.h. ihr Anteil im DMAPAA darf nur sehr gering sein. Bifunktionelle Verbindungen bewirken Vernetzungen im Polymer und führen dadurch zur Bildung von wasserunlöslichen Bestandteilen, die die Produkteffektivität bei der Anwendung beeinträchtigen. Daher ist der Vernetzunganteil so gering zu halten, daß die Wasserlöslichkeit der Polymerisatprodukte nicht wesentlich beeinträchtigt wird. So ist zu beachten, daß beispielsweise aus DMAPAA durch Abspaltung von Dimethylamin N-Allylacrylamid entstehen kann. Um Copolymere mit dem oben genannten Quotienten zu erhalten, sollte die Menge N-Allylacrylamid 30 ppm nicht überschreiten. Zur Durchführung der Copolymerisation des DMPAA mit ACA wird zunächst das Salz der basischen Monomeren mit Säuren bzw. das Umsetzungsprodukt mit qarternierenden Agentien wie beispielsweise Methylchlorid oder Dimethylsulfat gebildet. Anschließend wird eine wässrige Lösung des so kationisierten Monomeren mit anteiligen Mengen Acrylamid hergestellt und durch Radikalpolymerisation polymerisiert. Die Polymerisation kann durch Redoxsysteme, beispielsweise dem System Natriumbisulfit/Kaliumperoxodisulfat, durch thermisch zerfallende Initiatoren wie beispielsweise Azo-biisobutyronitril oder auch photochemisch gebildete Radikale, beispielsweise aus Benzoinisopropylether, initiiert werden. Durch die Polymerisation wird in Abhängigkeit vom Wassergehalt eine hochviskose Lösung, ein gummiartiges Gel oder ein spröder Feststoff erhalten. Durch Reduzierung des Wassergehalts auf 5-15% und Zerkleinerung kann ein Copolymerprodukt in Pulverform mit Korngrößen zwischen 0,1 und 1 mm erhalten werden.
Die Herstellung des Dimethylaminopropylacrylamids (DMAPAA) kann beispielsweise nach DE 25 02 247 A bzw. EP 0 070 425 A durch Umsetzung von einem Mol Acrylsäure bzw. Acrylamid mit 2 Mol Dimethylaminopropylamin und nachfolgende Pyrolyse erfolgen.

Vorzugsweise weisen die in einem erfindungsgemäßen Verfahren verwendbaren Polyelektrolyte einen Polymerisationsgrad von mindestens 95% und bevorzugt von mindestens 98% auf. Am meisten bevorzugt ist ein Polymerisationsgrad von 100%.

Die erfindungsgemäß zu verwendenden Polyelektrolyte weisen bei einem Anteil von 40 Gew.-% Polyelektrolyt und 60 Gew.-% Wasser bezogen auf die Gesamtmasse vorzugsweise eine Viskosität von 1000 bis 14000 mPa*s, besonders bevorzugt eine Viskosität von 4000 bis 8000 mPa*s auf, zu bestimmen nach dem Verfahren von Brookfield bei 20°C mit einer Spindel IV.

Die in den Verfahren erfindungsgemäß verwendbaren Polyelektrolyte können als Flüssigkeit oder als Wasser-in-Wasser Dispersion oder als Granulat hergestellt, transportiert und in dem erfindungsgemäßen Verfahren eingesetzt werden. Wasser-in-Wasser-Dispersion ermöglichen ein schnelles Auflösen der Polyelektrolyte in wässrigen Lösungen ohne Verklumpen. Polyelektrolyte in Granulatform sind leicht zu handhaben und zu transportieren. Vor dem Einsatz in wässrigen Aufschlusslösungen werden Granulate vorzugsweise vorverdünnt oder in Dispersionen überführt.

In einer bevorzugten Ausführungsform wird das Polyelektrolyt in den erfindungsgemäßen Verfahren in einer Endkonzentration des Polyelektrolyts von 1 bis 500 ppm, besonders bevorzugt 2 bis 250 ppm und ganz besonders bevorzugt von 5 bis 50 ppm bezogen auf die Aufschlusslösung eingesetzt.

Die beschriebenen Polyelektrolyte sind auch in kaustischen Lösungen weitgehend hitzebeständig und werden vorzugsweise in Aufschlusslösungen mit erhöhten Temperaturen eingesetzt, besonders bevorzugt bei Temperaturen von 80 bis 110°C.

In einer bevorzugten Ausführungsform findet das erfindungsgemäße Verfahren Anwendung auf wässrige Lösungen, wie sie beim Metallaufschluss zur Herstellung von Titandioxid entstehen, besonders bevorzugt auf wässrige Lösungen, die bei dem "Sulfat"-Verfahren zur Herstellung von Titandioxid anfallen. Bei dem Sulfatverfahren behandelt man eine aus Ilmenit (FeTiO₃) durch Reduktion mit Koks erhältliche Schlacke mit konzentrierter Schwefelsäure bei 100-180°C und löst den hierbei gewonnenen Aufschlußkuchen, gegebenenfalls unter Zusatz von Eisenschrott zur Reduktion von dreiwertigem Eisen, in heißem Wasser bzw. Natronlauge, wobei Titandioxid-Hydrat ausfällt, welches in Drehrohröfen bei 800 bis 1000°C zu feinkörnigem Anatas bzw. bei > 1000°C zu grobkörnigem Rutil gebrannt wird oder bei 800 bis 1000°C in Anwesenheit von Rutilkeimen zu feinkörnigem Rutil.

Das in dem erfindungsgemäßen Verfahren verwendete kationische Polyelektrolyt bindet sowohl organische wie auch anorganische kolloide und dispergierte nicht-wasserlösliche Feststoffe.

In einer weiteren bevorzugten Ausführungsform findet das erfindungsgemäße Verfahren Anwendung auf wässrige Lösungen, wie sie beim Metallaufschluss zur Herstellung von Aluminiumoxid, vorzugsweise nach dem Bayer-Verfahren, verwendet werden. Nach dem Bayer-Verfahren wird Bauxit vermahlen und das Aluminium in heißer wässriger Natronlauge in lösliches Natriumtetrahydroxyaluminatsalz überführt. Die meisten anderen Bauxitinhaltsstoffe sind unlöslich in der alkalischen Aufschlußlösung.
Die heiße Aufschlußlösung wird dann etwas abgekühlt und die großeren unlöslichen Teile in einem Grobfilter, der meist als Sandfilter ausgeführt ist, abgetrennt. Dem Grobfilter ist in der Regel ein weiterer Feinfilter nachgeschaltet, der unlösliche Feinststoffe aus der Lösung entfernt. Die Grob- und Feinfilter werden in regelmäßigen Abständen oder kontinuierlich mit Wasser von Ablagerungen freigewaschen.
Nach der Abtrennung nicht-löslicher Bestandteile in den vorgeschalteten Filtern wird die Aluminatlösung soweit abgekühlt, daß Aluminiumhydoxid ausfällt. Das so gefällte Aluminiumhydroxid wird dann klassiert, d.h. größe Feststoffanteile werden abgetrennt und feinere Feststoffe, meist mit einem Durchmesser < 45 µm werden als Impfkristalle zur weiteren Fällung wiederverwendet. Die gröbere Fraktion der Aluminiumhydroxidfällung wird mit Wasser gewaschen und durch Kalzinieren in Aluminiumoxid überführt.
In den großtechnischen Verfahren wird die verbleibende Aufschlusslösung dann wieder erhitzt und gegebenenfalls eingedampft und/oder es wird Natronlauge nachdosiert und/oder es werden Verunreinigungen aus der Lösung entfernt.

Je nach Ursprung weisen die Bauxitrohmaterialien 0,01 bis 0,25 % Kohlenstoff auf. Diese Kohlenstoffverbindungen werden während des Aufschlusses großteils in Huminstoffe, Oxalate und Carbonate überführt. Einige dieser Stoffe, wie beispielsweise die Huminstoffe und Oxalate, liegen in nicht-wasserlöslicher Form als dispergierte Feststoffteilchen und/oder Kolloide vor, die nicht durch herkömmliche Filtrierverfahren abtrennbar sind.
Diese und andere nicht-wasserlösliche organische und/oder anorganische Verunreinigungen üben in der aluminathaltigen Aufschlusslösung einen negativen Einfluß auf die Effektivität und die Fällungsgeschwindigkeit des Aluminiumhydroxids aus. Geladene Verunreinigungen wie beispielsweise Huminstoffe können mit Hilfe kationischer Polyelektrolyte aus der Aufschlusslösung vor dem Fällungsschritt entfernt werden.

Das Bayer-Verfahren weist demnach vorzugsweise mindestens die folgenden Schritte auf:
a) einen Aufschluß von vermahlenem Bauxit mit heißer wässriger Natronlauge
b) die Grobabtrennung von Feststoffen durch Filtration, vorzugsweise durch einen Sandfilter,
c) die Feinabtrennung von Feststoffen,
d) die Abtrennung von Hydroxyaluminat durch Ausfällung aus der Aufschlusslösung durch Abkühlen.

Die erfindungsgemäß zu verwendenden kationischen Polyelektrolyte können an mehreren Stellen zwischen Schritt a) und Schritt d) in die Aufschlußlösung dosiert werden, müssen jedoch spätestens vor dem letzten Filtrationschritt vor der Aluminiumhydroxidfällung eingesetzt werden.

Vorzugsweise erfolgt der Zusatz des oben beschriebenen kationischen Polyelektrolyts vor und/oder nach der Grobabtrennung gemäß Schritt b), wobei das kationische Polyelektrolyt vorzugsweise in das Waschwasser der Grobabtrennung dosiert wird.

Vorzugsweise wird der Klarlauf der Abtrennung gemäß Schritt d) zumindstens teilweise durch Reinigung und/oder Zusatz von Natron und/oder Eindickung durch Verdampfen und/oder Erhitzen aufbereitet und für den Aufschluss gemäß Schritt a) zumindestens teilweise wiederverwendet. In diesem Fall kann das kationische Polyelektrolyt auch allein oder zusätzlich im Rahmen der Aufarbeitung in den Prozeß dosiert werden.

Zusätzlich zu dem kationischen Polyelektrolyt kann vorzugsweise auch mindestens ein anionisches Elektrolyt der Aufschlußlösung zugesetzt werden. Besonders bevorzugt sind anionische Elektrolyte auf Basis von Acrylamid und Acrylsäure, wie sie beispielsweise in der EP 0 256 312 B1 beschrieben werden.

Die anionischen Elektrolyte können in dem selben Verfahrensschritt wie die kationischen Polyelektrolyte oder in einem nachfolgenden Verfahrensschritt der Aufschlusslösung zugesetzt werden. Es ist jedoch darauf zu achten, daß zuerst der kationische Polyelektrolyt zugesetzt wird und daß dieser ausreichend Zeit hat, mit den organischen Verunreinigungen in Wechselwirkung zu treten bevor der anionische Polyelektrolyt zugesetzt wird.

Vorzugsweise findet ein anionischer Polyelektrolyt Verwendung, der
a) 90 bis 30 Gew.-% Acrylsäure und/oder Methacrylsäure,
b) 10 bis 60 Gew.-% einer Verbindung der Formel

   CH₂=CR₁CONH-X-NR₂R₃

   worin R₁ für ein Wasserstoff oder einen Methylrest, R₂ und R₃, die gleich oder verschieden sein können, einen Methyl- oder Ethylrest bedeuten und X für einen gegebenenfalls verzweigten Alkylenrest mit 1 bis 5 Kohlenstoff-Atomen steht,
c) 0 bis 50 Gew.-% Acrylamidomethylpropansulfonsäure,
d) 0 bis 10 Gew.-% einer anderen ethylenisch ungesättigten Verbindung einpolymerisiert enthalten, und das Molekulargewicht, gemessen bei einem pH-Wert von 8,0 kleiner als 100.000 ist enthält.

Solche Verbindungen sind in der EP 0 256 312 B1 als Dispergierhilfsmittel beschrieben.
Die anionischen Polyelektrolyte werden nach an sich bekannten Polymerisationsmethoden erhalten. Vorzugsweise wird die Polymerisation der Monomeren in wässriger Lösung oder in Gemischen aus Wasser und mit Wasser mischbaren Lösungsmitteln wie Alkohol, beispielsweise Isopropanol, durchgeführt. Die Initiierung der Polymerisation kann analog zu der für die kationischen Polymere beschriebenen Initiierung erfolgen.

Die für ein erfindungsgemäßes Verfahren verwendbaren anionischen Polyelektrolyte weisen vorzugsweise ein Molekulargewicht von 500 bis 50 000 auf, bestimmt durch Gelpermeationschromatographie, und/oder vorzugsweise einen Polymerisationsgrad von mindestens 90 %, besonders bevorzugt mindestens 95 % und ganz besonders bevorzugt mindestens 98 % auf. Am meisten bevorzugt ist ein Polymerisationsgrad von 100 %.

In einer bevorzugten Ausführungsform der vorliegenden Erfindung wird in den Klarlauf der der Filtrationsstufe, in die das anionische Polyelektrolyt dosiert wurde noch einmal kationisches Polyelektrolyt nachdosiert.

Da der Anteil organischer Verunreinigungen in Bauxitrohstoffen unterschiedlicher Herkunft stark variiert, erfolgt die Dosierung der Polyelektrolyte vorzugsweise in Abhängigkeit des Huminsäureanteils in der Aufschlußlösung als Regelgröße.

Sowohl der kationische und/oder der anionische Polyelektrolyt können mehrfach in verschiedenen Schritten des Bayer-Verfahrens zugesetzt werden.

In einem weiteren Aspekt betrifft die vorliegende Erfindung eine Vorrichtung zur Durchführung des Bayer-Verfahrens zur Herstellung von Aluminiumoxid aus Bauxit, die zumindest einen Aufschlußbehälter, eine Feststoffabtrennung und einen Fällungsbehälter oder eine Filtrationsvorrichtung umfaßt und die eine Zugabestelle für mindestens ein kationisches Polyelektrolyt aufweist, wobei das kationische Polyelektrolyt mindestens einen Anteil von 50 Mol-% von mit Mineralsäure neutralisiertem oder quaterniertem und anschließend polymerisiertem Dialkyl aminoalkyl(meth)acrylamid, vorzugsweise Dimethylaminopropylacrylamid, bezogen auf die Gesamtmenge des Polyelektrolyts enthält.

Diese Zugabestelle ist vorzugsweise als Einfüllstutzen für wässrige Lösungen oder Dispersionen oder als Mischkammer mit Zugang zur Aufschlußlösung ausgeführt. Die Zugabestelle kann sich an jeglicher Vorrichtung zur Durchführung des Bayer-Verfahrens befinden, die sich vor der endgültigen Abtrennung von Feststoffen vor dem Fällungsschritt befindet. Im folgenden wird die Erfindung anhand eines Beispiels erläutert. Dieses Beispiel dient lediglich der Erläuterung der Erfindung und schränkt den allgemeinen Erfindungsgedanken nicht ein.

### Beispiel Fällung nicht-wasserlöslicher Verunreinigungen

Im Technikumsmaßstab wurde eine Bauxitmischung aus 60 Gew.-% des Weipa A- und 40 Gew.-% des Boke-Bauxittyps mit einem Kohlenstoffanteil von etwa 2,0 % dem Bayer-Aufschlussverfahren unterzogen.

Mit einer 1 gew.-%igen wässrigen kationischen Homopolymerlösung, hergestellt aus quaternierten und anschließend polymerisierten Dimethylaminopropylacrylamiden, wurde die alkalische Aufschlusslösung auf eine Endkonzentration von 40 ppm an kationischem Polymer gebracht und 3 Minuten gerührt. Es wurden Homopolyelektrolyte mit Viskositäten von 1500, 3900 oder 6450 mPas*s eingesetzt, deren Viskosität als 40 Gew.-%ige wässrige Lösung bezogen auf die Gesamtmenge bei 20°, nach Brook mit einer Spindel Typ IV bei 10 U/min bestimmt wurden.
Das Endvolumen der Aufschlusslösung betrug 1000 ml in einem Meßzylinder.
Nach weiteren 5 Minuten Absetzzeit wurde die Trübung einer Probe des klaren Überstands mit einem Photometer des Typs Philipps PU 8620 Spektral-Photometer bei einer Wellenlänge von 691 nm gemessen.
Während Kontrollansätze ohne kationische Polymere keinen Einfluß auf die Trübung des Aufschlussüberstands zeigten, bewirkten alle kationischen Polyelektrolyte mit den oben aufgeführten Viskositäten eine signifikante Reduktion der Trübung des untersuchten Überstands.

## Patentansprüche

1. Verfahren zur Entfernung nicht-wasserlöslicher Substanzen aus Lösungen wäßriger Metallaufschlüsse durch den Zusatz mindestens eines wasserlöslichen kationischen Polyelektrolyts, wobei das Polyelektrolyt mindestens einen Anteil von 50 Mol-% von mit mindestens einer Mineralsäure neutralisiertem oder quaterniertem und anschließend polymerisiertem Dialkylaminoalkyl(meth)acrylamid, vorzugsweise Dimethylaminopropylacrylamid, bezogen auf die Gesamtmenge des Polyelektrolyts, enthält, **dadurch gekennzeichnet, dass** das Polyelektrolyt einen Polymerisationsgrad von mindestens 90 % aufweist.

2. Verfahren gemäß Anspruch 1, **dadurch gekennzeichnet, daß** das kationische Polyelektrolyt mindestens einen Anteil von 70 Mol-%, vorzugsweise einen Anteil von mindestens 90 Mol-% von mit Mineralsäure neutralisiertem oder quaterniertem und anschließend polymerisiertem Dialkylaminoalkyl(meth)acrylamid, vorzugsweise Dimethylaminopropylacrylamid, bezogen auf die Gesamtmenge des Polyelektrolyts, enthält.

3. Verfahren gemäß einem der Ansprüche 1 und 2, **dadurch gekennzeichnet, daß** das kationische Polyelektrolyt mindestens ein Homopolymer aus mit mindestens einer Mineralsäure neutralisiertem oder quaterniertem und anschließend polymerisiertem Dialkylaminoalkyl(meth)acrylamid, vorzugsweise Dimethylaminopropylacrylamid, ist.

4. Verfahren gemäß einem der Ansprüche 1 und 2, **dadurch gekennzeichnet, daß** das Polyelektrolyt mindestens ein Copolymer von Acrylamid und mit mindestens einer Mineralsäure neutralisiertem oder quaterniertem und anschließend polymerisiertem Dialkylaminoalkyl(meth)acrylamid, vorzugsweise Dimethylaminopropylacrylamid, ist.

5. Verfahren gemäß Anspruch 4, bei denen der Quotient aus Grenzviskosität des Copolmeren und dem Molverhältnis von Acrylamid zu Dimethylaminopropylacrylamid mindestens 200 ml/g aufweist.

6. Verfahren gemäß einem der Ansprüche 1 bis 5, **dadurch gekennzeichnet, daß** das Polyelektrolyt einen Polymerisationsgrad von mindestens 95 % und bevorzugt von mindestens 98 % aufweist.

7. Verfahren nach einem der Ansprüche 1 bis 6, **dadurch gekennzeichnet, daß** das Polyelektrolyt bei einem Anteil von 40 Gew.-% Polyelektrolyt und 60 Gew.% Wasser, bezogen auf die Gesamtmasse eine Viskosität von 1000 bis 14000 mPa*s, vorzugsweise eine Viskosität von 4000 bis 8000 mPa*s, aufweist, zu bestimmen nach dem Verfahren von Brookfield bei 20°C mit einer Spindel IV.

8. Verfahren nach einem der Ansprüche 1 bis 7, **dadurch gekennzeichnet, daß** es sich bei dem wässrigen Metallaufschluß um einen Aufschluss zur Herstellung von Titandioxid, vorzugsweise nach dem "Sulfat"-Verfahren handelt.

9. Verfahren nach einem der Ansprüche 1 bis 7, **dadurch gekennzeichnet, daß** es sich bei dem wässrigen Metallaufschluß um einen Aufschluss zur Herstellung von Aluminiumoxid, vorzugsweise nach dem Bayer-Verfahren handelt.

10. Verfahren nach einem der Ansprüche 1 bis 9, **dadurch gekennzeichnet, daß** der Polyelektrolyt als Flüssigkeit oder als Wasser-in-Wasser Dispersion oder als Granulat eingesetzt wird.

11. Verfahren nach einem der Ansprüche 1 bis 10, **dadurch gekennzeichnet, daß** die Endkonzentration des Polyelektrolyts 1 bis 500 ppm, vorzugsweise 2 bis 250 ppm und besonders bevorzugt 5 bis 50 ppm bezogen auf die Aufschlusslösung beträgt.

12. Verfahren nach einem der Ansprüche 1 bis 11, **dadurch gekennzeichnet, daß** die Aufschlußlösung eine erhöhte Temperatur, vorzugsweise 80 bis 110°C aufweist.

13. Verfahren nach einem der Ansprüche 9 bis 12, **dadurch gekennzeichnet, daß** das Bayer-Verfahren mindestens die folgenden Schritte aufweist:
a) einen Aufschluß von vermahlenem Bauxit mit heißer wäßriger Natronlauge,
b) die Grobabtrennung von Feststoffen durch Filtration, vorzugsweise durch einen Sandfilter,
c) die Feinabtrennung von Feststoffen,
d) die Abtrennung von Hydroxyaluminat durch Ausfällung aus der Aufschlußlösung durch Abkühlen,
und, daß der Zusatz mindestens eines kationischen Polyelektrolyts vor und/oder nach der Grobabtrennung gemäß Schritt b) erfolgt.

14. Verfahren nach Anspruch 13, **dadurch gekennzeichnet, daß** der Klarlauf der Abtrennung gemäß Schritt d) zumindstens teilweise durch Reinigung und/oder Zusatz von Natron und/oder Eindickung durch Verdampfen und/oder Erhitzen aufbereitet wird und für den Aufschluss gemäßSchritt a) zumindestens teilweise wiederverwendet wird.

15. Verfahren nach Anspruch 13 oder 14, **dadurch gekennzeichnet, daß** zeitlich nach dem Zusatz des kationischen Polyelektrolyts im selben Verfahrensschritt oder einem nachfolgenden Verfahrensschritt, jedoch vor der Feinabtrennung von Schritt c) mindestens ein anionischer wasserlöslicher Polyelektrolyt zugesetzt wird.

16. Verfahren nach Anspruch 15, **dadurch gekennzeichnet, daß** der anionische Polyelektrolyt
a) 90 bis 30 Gew.-% Acrylsäure und/oder Methacrylsäure,
b) 10 bis 60 Gew.-% einer Verbindung der Formel
CH₂=CR₁CONH-X-NR₂R₃
worin R₁ für ein Wasserstoff oder einen Methylrest, R₂ und R₃, die gleich oder verschieden sein können, einen Methyl- oder Ethylrest bedeuten und X für einen gegebenenfalls verzweigten Alkylenrest mit 1 bis 5 Kohlenstoff-Atomen steht,
c) 0 bis 50 Gew.-% Acrylamidomethylpropansulfonsäure,
d) 0 bis 10 Gew.-% einer anderen ethylenisch ungesättigten Verbindung einpolymerisiert enthalten, und das Molekulargewicht, gemessen bei einem pH-Wert von 8,0 kleiner als 100.000 ist
enthält.

17. Verfahren nach Anspruch 15 oder 16, **dadurch gekennzeichnet, daß** der anionische Polyelektrolyt einen Polymerisationsgrad von mindestens 90 %, vorzugsweise mindestens 95 % und besonders bevorzugt mindestens 98 % aufweist.

18. Verfahren nach einem der Ansprüche 9 bis 17, **dadurch gekennzeichnet, daß** die Dosierung der Polyelektrolyte, insbesondere des kationischen Polyelektrolyts, entsprechend des Huminsäureanteils in der Aufschlußlösung erfolgt.

19. Verfahren nach einem der Ansprüche 1 bis 14, **dadurch gekennzeichnet, daß** der kationische und/oder der anionische Polyelektrolyt mehrfach in verschiedenen Schritten des Bayer-Verfahrens zugesetzt wird.

## Claims

1. Process for removing water-insoluble substances from solutions of aqueous metal extracts by addition of at least one water-soluble cationic polyelectrolyte, where the polyelectrolyte comprises at least 50 mol% of dialkylaminoalkyl(meth)acrylamide, preferably dimethylaminopropylacrylamide, which has been neutralized or quaternized by at least one mineral acid and subsequently polymerized, based on the total amount of the polyelectrolyte, **characterized in that** the polyelectrolyte has a degree of polymerization of at least 90%.

2. Process according to Claim 1, **characterized in that** the cationic polyelectrolyte comprises at least 70 mol%, preferably at least 90 mol%, of dialkylaminoalkyl(meth)acrylamide, preferably dimethylaminopropylacrylamide, which has been neutralized or quaternized by means of mineral acid and subsequently polymerized, based on the total amount of the polyelectrolyte.

3. Process according to either of Claims 1 and 2, **characterized in that** the cationic polyelectrolyte is at least one homopolymer of dialkylaminoalkyl-(meth)acrylamide, preferably dimethylaminopropylacrylamide, which has been neutralized or quaternized by at least one mineral acid and subsequently polymerized.

4. Process according to either of Claims 1 and 2, **characterized in that** the polyelectrolyte is at least one copolymer of acrylamide and dialkylaminoalkyl(meth)acrylamide, preferably dimethylaminopropylacrylamide, which has been neutralized or quaternized by at least one mineral acid and subsequently polymerized.

5. Process according to Claim 4 in which the quotient of limiting viscosity of the copolymer and the molar ratio of acrylamide to dimethylaminopropylacrylamide is at least 200 ml/g.

6. Process according to any of Claims 1 to 5,
**characterized in that** the polyelectrolyte has a degree of polymerization of at least 95% and preferably at least 98%.

7. Process according to any of Claims 1 to 6,
**characterized in that** the polyelectrolyte has, at a proportion of 40% by weight of polyelectrolyte and 60% by weight of water, based on the total mass, a viscosity of from 1000 to 14 000 mPa*s, preferably a viscosity of from 4000 to 8000 mPa*s, determined by the Brookfield method at 20°C using a Spindle IV.

8. Process according to any of Claims 1 to 7,
**characterized in that** the aqueous metal extract is an extract for the preparation of titanium dioxide, preferably by the "sulfate" process.

9. Process according to any of Claims 1 to 7,
**characterized in that** the aqueous metal extract is an extract for the preparation of aluminum oxide, preferably by the Bayer process.

10. Process according to any of Claims 1 to 9,
**characterized in that** the polyelectrolyte is used as a liquid or as a water-in-water dispersion or as a granulated material.

11. Process according to any of Claims 1 to 10,
**characterized in that** the final concentration of the polyelectrolyte is from 1 to 500 ppm, preferably from 2 to 250 ppm and particularly preferably from 5 to 50 ppm, based on the digestion solution.

12. Process according to any of Claims 1 to 11,
**characterized in that** the digestion solution is at an elevated temperature, preferably from 80 to 110°C.

13. Process according to any of Claims 9 to 12,
**characterized in that** the Bayer process comprises at least the following steps:
a) a digestion of milled bauxite with hot aqueous sodium hydroxide,
b) the coarse separation of solids by filtration, preferably by means of a sand filter,
c) the fine separation of solids,
d) the precipitation of hydroxyaluminate from the digestion solution by means of cooling,
and **in that** the addition of at least one cationic polyelectrolyte is carried out prior to and/or after the coarse separation of step b).

14. Process according to Claim 13, **characterized in that** the clear mother liquor from the separation of step d) is at least partly worked up by purification and/or addition of sodium carbonate and/or concentration by evaporation and/or heating and is at least partly reused for the digestion of step a).

15. Process according to Claim 13 or 14, **characterized in that** at least one anionic water-soluble polyelectrolyte is added at a time after the addition of the cationic polyelectrolyte in the same process step or in a subsequent process step, but before the fine separation of step c).

16. Process according to Claim 15, **characterized in that** the anionic polyelectrolyte comprises
a) from 90 to 30% by weight of acrylic acid and/or methacrylic acid,
b) from 10 to 60% by weight of a compound of the formula
CH₂=CR₁CONH-X-NR₂R₃
where R₁ is hydrogen or a methyl radical, R₂ and R₃ may be identical or different and are each a methyl or ethyl radical and X is a branched or unbranched alkylene radical having from 1 to 5 carbon atoms,
c) from 0 to 50% by weight of acrylamidomethylpropanesulfonic acid,
d) from 0 to 10% by weight of another ethylenically unsaturated compound in copolymerized form, and whose molecular weight measured at a pH of 8.0 is less than 100,000.

17. Process according to Claim 15 or 16, **characterized in that** the anionic polyelectrolyte has a degree of polymerization of at least 90%, preferably at least 95% and particularly preferably at least 98%.

18. Process according to any of Claims 9 to 17,
**characterized in that** the polyelectrolytes, in particular the cationic polyelectrolyte, are introduced according to the proportion of humic acid in the digestion solution.

19. Process according to any of Claims 1 to 14,
**characterized in that** the cationic polyelectrolyte and/or the anionic polyelectrolyte are/is added a plurality of times in various steps of the Bayer process.

## Revendications

1. Procédé pour l'élimination de substances insolubles dans l'eau à partir de solutions d'extractions aqueuses de métaux, par l'addition d'au moins un polyélectrolyte cationique soluble dans l'eau, le polyélectrolyte contenant au moins une proportion de 50 % en moles de dialkylaminoalkyl(méth)acrylamide, de préférence de diméthylaminopropylacrylamide, rendu quaternaire ou neutralisé par au moins un acide minéral et ensuite polymérisé, par rapport à la quantité totale du polyélectrolyte, **caractérisé en ce que** le polyélectrolyte présente un degré de polymérisation d'au moins 90 %.

2. Procédé selon la revendication 1, **caractérisé en ce que** le polyélectrolyte cationique contient au moins une proportion de 70 % en moles, de préférence une proportion d'au moins 90 % en moles, de dialkylaminoalkyl(méth)acrylamide, de préférence de diméthylaminopropylacrylamide, rendu quaternaire ou neutralisé par un acide minéral et ensuite polymérisé, par rapport à la quantité totale du polyélectrolyte.

3. Procédé selon la revendication 1 ou 2,
**caractérisée en ce que** le polyélectrolyte cationique est au moins un homopolymère de dialkylaminoalkyl-(méth)acrylamide, de préférence de diméthylaminopropylacrylamide, rendu quaternaire ou neutralisé par au moins un acide minéral et ensuite polymérisé.

4. Procédé selon la revendication 1 ou 2,
**caractérisé en ce que** le polyélectrolyte est au moins un copolymère d'acrylamide et de dialkylaminoalkyl-(méth)acrylamide, de préférence de diméthylaminopropylacrylamide, rendu quaternaire ou neutralisé par au moins un acide minéral et ensuite polymérisé.

5. Procédé selon la revendication 4, dans lequel le quotient de la viscosité intrinsèque du copolymère et du rapport molaire de l'acrylamide au diméthylaminopropylacrylamide est d'au moins 200 ml/g.

6. Procédé selon l'une quelconque des revendications 1 à 5, **caractérisé en ce que** le polyélectrolyte présente un degré de polymérisation d'au moins 95 % et de préférence d'au moins 98 %.

7. Procédé selon l'une quelconque des revendications 1 à 6, **caractérisé en ce qu'**à une proportion de 40 % en poids de polyélectrolyte et 60 % en poids d'eau, par rapport à la masse totale, le polyélectrolyte présente une viscosité de 1 000 à 14 000 mPa.s, de préférence une viscosité de 4 000 à 8 000 mPa.s, déterminée selon le procédé de Brookfield à 20 °C avec une broche IV.

8. Procédé selon l'une quelconque des revendications 1 à 7, **caractérisé en ce que** l'extraction aqueuse de métal est une extraction pour la production de dioxyde de titane, de préférence selon la procédé "au sulfate".

9. Procédé selon l'une quelconque des revendications 1 à 7, **caractérisé en ce que** l'extraction aqueuse de métal consiste en une extraction pour la production d'oxyde d'aluminium, de préférence selon le procédé Bayer.

10. Procédé selon l'une quelconque des revendications 1 à 9, **caractérisé en ce que** le polyélectrolyte est utilisé sous forme de liquide ou de dispersion eau-dans-eau ou de produit granulé.

11. Procédé selon l'une quelconque des revendications 1 à 10, **caractérisé en ce que** la concentration finale du polyélectrolyte va de 1 à 500 ppm, de préférence de 2 à 250 ppm et de façon particulièrement préférée de 5 à 50 ppm, par rapport à la solution d'extraction.

12. Procédé selon l'une quelconque des revendications 1 à 11, **caractérisé en ce que** la solution d'extraction présente une température élevée, de préférence de 80 à 110 °C.

13. Procédé selon l'une quelconque des revendications 9 à 12, **caractérisé en ce que** le procédé Bayer comprend au moins les étapes suivantes:
a) une extraction de la bauxite broyée, à l'aide d'une solution aqueuse chaude d'hydroxyde de sodium,
b) la séparation grossière des solides par filtration, de préférence au moyen d'un filtre à sable,
c) la séparation fine des solides,
d) la séparation d'hydroxyaluminate par précipitation à partir de la solution d'extraction, par refroidissement,
et **en ce que** l'addition d'au moins un polyélectrolyte cationique s'effectue avant et/ou après la séparation grossière selon l'étape b).

14. Procédé selon la revendication 13, **caractérisé en ce que** l'effluent limpide de la séparation selon l'étape d) est au moins en partie traité par purification et/ou addition de soude et/ou épaississement par évaporation et/ou chauffage et au moins en partie réutilisé pour l'extraction selon l'étape a).

15. Procédé selon la revendication 13 ou 14,
**caractérisé en ce que** chronologiquement après l'addition du polyélectrolyte cationique dans la même étape du procédé ou dans une étape subséquente du procédé, mais avant la séparation fine de l'étape c) on ajoute au moins un polyélectrolyte anionique soluble dans l'eau.

16. Procédé selon la revendication 15, **caractérisée en ce que** le polyélectrolyte anionique contient, intégrés par polymérisation,
a) de 90 à 30 % en poids d'acide acrylique et/ou d'acide méthacrylique,
b) de 10 à 60 % en poids d'un composé de formule
CH₂=CR₁CONH-X-NR₂R₃
dans laquelle R₁ représente un atome d'hydrogène ou un radical méthyle, R₂ et R₃, qui peuvent être identiques ou différents, représentent un radical méthyle ou éthyle, et X représente un radical alkylène éventuellement ramifié ayant de 1 à 5 atomes de carbone,
c) de 0 à 50 % en poids d'acide acrylamidométhylpropanesulfonique,
d) de 0 à 10 % en poids d'un autre composé à insaturation éthylénique,
et la masse moléculaire, mesurée à un pH de 8,0, est inférieure à 100 000.

17. Procédé selon la revendication 15 ou 16,
**caractérisé en ce que** le polyélectrolyte anionique présente un degré de polymérisation d'au moins 90 %, de préférence d'au moins 95 % et de façon particulièrement préférée d'au moins 98 %.

18. Procédé selon l'une quelconque des revendications 9 à 17, **caractérisé en ce que** l'addition dosée des polyélectrolytes, en particulier du polyélectrolyte cationique, s'effectue en fonction de la concentration d'acide humique dans la solution d'extraction.

19. Procédé selon l'une quelconque des revendications 1 à 14, **caractérisé en ce que** le polyélectrolyte cationique et/ou le polyélectrolyte anionique est/sont ajouté(s) en plusieurs fois dans diverses étapes du procédé Bayer.
